# EUROPEAN PATENT SPECIFICATION

(11) **EP 3 401 643 B1**
(45) Date of publication and mention of the grant of the patent: **02.09.2020**
(21) Application number: 17183000.3
(22) Date of filing: 25.07.2017
(51) Int. Cl.: G01D 5/14, G01B 7/30, H03M 1/20

(54) **ENCODER, ELECTRIC MACHINE, ENCODER DATA PROCESSING METHOD AND STORAGE MEDIUM**
CODIERER, ELEKTRISCHE MASCHINE, CODIERERDATENVERARBEITUNGSVERFAHREN UND SPEICHERMEDIUM
CODEUR, MACHINE ÉLECTRIQUE, PROCÉDÉ DE TRAITEMENT DE DONNÉES DE CODEUR ET SUPPORT D'INFORMATIONS

(30) Priority: 12.05.2017 CN 201710334893
(43) Date of publication of application: 14.11.2018
(73) Proprietor: Siemens Aktiengesellschaft, 80333 München (DE)
(72) Inventor: PANG, Jian Guo, Shanghai 200000 (CN); LI, Hao, 200135 Shanghai (CN); MENG, Er Ping, Nanjing, Jiangsu 210000 (CN); FAN, Shun Jie, Beijing 100096 (CN)
(74) Representative: Isarpatent

(56) References cited:
- EP-A1- 1 021 698
- EP-A1- 1 874 669
- WO-A1-2006/077795
- US-A1- 2012 146 561
- US-A1- 2016 033 580

## Description

### Technical field

The present invention relates to the field of signal processing, in particular an encoder, an electric machine and an encoder data processing method, as well as a computer-readable storage medium.

### Background art

An encoder is a device which encodes signals or data, converting them to a signal form which can be used for communication, transmission and storage, and is widely used for detection of speed and position in fields such as industry and medical equipment. For example, in scenarios requiring electric machine control (motor control), an encoder is generally arranged to correspond to an electric machine, e.g. installed on an electric machine output shaft etc., and used to detect information about the current position of an electric machine rotor; an electric machine driver then subjects the electric machine to corresponding control according to the information about the current position of the electric machine rotor, as detected by the encoder, and other relevant information.

Many types of encoder are possible, e.g. it may be an optoelectronic encoder, or a capacitive encoder, etc. With regard to electric machine control systems which use capacitive encoders, the capacitive encoder and the electric machine driver each have an independent internal clock source, such as a crystal oscillator, to perform clock pulse synchronization, and the two exchange information via a communication module.

US 2012/146561 A1 describes an electronically commutated electric motor comprising a stator and a permanent-magnetic rotor. The electric motor also comprises a control unit which is effectively connected to the stator and is designed to generate control signals for commutating the stator in such a way that the stator can generate a rotating magnetic field in order to rotate the rotor. The electric motor further comprises at least one rotor position sensor which is designed to detect a position, especially an angular position, of the rotor and generate a rotor position signal representing the position of the rotor. The control unit is designed to generate the control signals in accordance with the rotor position signal and to sample and quantize the rotor position signal and generate a digital rotor position signal. The digital rotor position signal forms a time-related data stream which corresponds to the sampled and quantized rotor position signal.

WO 2006/077795 A1 describes a sampling frequency converting apparatus capable of appropriately adjusting the sampling frequency to provide an improved function. A digital filter performs a digital filtering of a digital signal as an intermediately generated signal; a phase difference determining part determines a phase difference between a clock signal of a target frequency and the intermediately generated signal of a sampling frequency between sampling times; and a filter coefficient calculating part calculates, based on the phase difference, filter coefficients of the digital filter to establish the filtering characteristic of the digital filter at the sampling time of the clock signal. The digital filter performs a digital filtering of the intermediately generated signal based on the filtering characteristics established by use of the filter coefficients, thereby performing a sampling frequency conversion of the input signal of a sampling frequency to an output signal of the sampling frequency.

### Content of the invention

In one aspect of embodiments of the present invention, an encoder and an electric machine are proposed, and in another aspect, a data processing method of an encoder is proposed, for the purpose of eliminating the problem of sudden changes in electric machine rotation speed calculated at an electric machine driver side, caused by clock asynchrony between an encoder and an electric machine driver, so as to improve the precision of electric machine control, and improve product quality.

An encoder provided in an embodiment of the present invention comprises: an analog sampling circuit, an analog-to-digital conversion module, a digital signal processing module and a communication module, wherein the analog sampling circuit is configured to acquire an analog sampling signal carrying electric machine rotor position information; the analog-to-digital conversion module is configured to convert the analog sampling signal acquired to a digital sampling signal comprising multiple digital sampling points; the digital signal processing module is configured to process the digital sampling signal, to obtain a first processing signal, wherein a sampling rate of the first processing signal is a first sampling rate; the communication module is configured to communicate with an electric machine driver, comprising: sending, to an electric machine driver, a signal to be sent; in addition, the encoder further comprises: an upsampling processing module, configured to subject the first processing signal to upsampling processing, such that the first processing signal is converted to a second processing signal, wherein a sampling rate of the second processing signal is a second sampling rate which is higher than the first sampling rate, and to provide the second processing signal to the communication module as a signal to be sent. Clearly, the second processing signal in an embodiment of the present invention, after the first processing signal has been processed to increase the sampling rate etc., has reduced the angular difference between two sampling points, and thereby greatly increased the accuracy of the sampling points, and in turn ameliorated problems such as abnormal spikes in the electric machine rotation speed signal calculated at the driver side, caused by the problem of clock asynchrony.

In one embodiment, the upsampling processing module comprises: a data cache sub-module, configured to receive and cache a first processing signal with a first sampling rate from the digital signal processing module; a zero interpolation sub-module, configured to insert N-1 zeros uniformly between each pair of adjacent digital sampling points in the first processing signal with the first sampling rate, on the basis of a set interpolation factor N, to obtain an intermediate signal, a sampling frequency of which is a second sampling rate; the second sampling rate is N times the first sampling rate, wherein N is a positive integer; and an interpolation filtering sub-module, configured to subject the intermediate signal with the second sampling rate to interpolation filtering, to obtain a second processing signal, and provide the second processing signal to the communication module as a signal to be sent. In this embodiment, a particular form of implementation of an upsampling processing module has been disclosed, which is simple and easy, and compared with using a digital sampling module with a high sampling rate, is not only lower in cost but also has a higher resolution.

In one embodiment, the lower limit of the value of said N is 1, and the upper limit of the value is the ratio of the maximum value of a data frequency which can be outputted by the upsampling processing module, to the first sampling rate. In this embodiment, a specific range of values of N has been given.

An electric machine provided in an embodiment of the present invention comprises an encoder from any one of the embodiments above. Clearly, the electric machine in this embodiment also has the abovementioned beneficial effects.

A signal processing method of an encoder provided in an embodiment of the present invention comprises: acquiring an analog sampling signal carrying electric machine rotor position information; converting the analog sampling signal to a digital sampling signal comprising multiple digital sampling points; subjecting the digital sampling signal to processing which includes filtering, to obtain a first processing signal; a sampling rate of the first processing signal being a first sampling rate; in addition, the method further comprises: subjecting the first processing signal to upsampling processing, such that the first processing signal is converted to a second processing signal, wherein a sampling rate of the second processing signal is a second sampling rate which is higher than the first sampling rate; sending the second processing signal to an electric machine driver. Clearly, the second processing signal in an embodiment of the present invention, after the first processing signal has been processed to increase the sampling rate etc., has reduced the angular difference between two sampling points, and thereby greatly increased the accuracy of the sampling points, and in turn ameliorated problems such as abnormal spikes in the electric machine rotation speed signal calculated at the driver side, caused by the problem of clock asynchrony.

In one embodiment, the step of subjecting the first processing signal with the first sampling rate to upsampling processing, such that the first processing signal with the first sampling rate is converted to a second processing signal, comprises: inserting N-1 zeros uniformly between each pair of adjacent digital sampling points in the first processing signal, on the basis of a set interpolation factor N, to obtain an intermediate signal, a sampling frequency of which is a second sampling rate, the second sampling rate being N times the first sampling rate, wherein N is a positive integer; and subjecting the intermediate signal to interpolation filtering, to obtain a second processing signal. In this embodiment, a particular form of implementation of an upsampling processing module has been disclosed, which is simple and easy, and compared with using a digital sampling module with a high sampling rate, is not only lower in cost but also has a higher resolution.

A computer program product provided in an embodiment of the present invention performs steps of the method as in the embodiments above.

A computer-readable storage medium is provided in an embodiment of the present invention, on which is stored a computer program which, when executed by a processor, implements steps of the signal processing method of an encoder described above. Clearly, the computer-readable storage medium in this embodiment also has the abovementioned beneficial effects.

### Description of the accompanying drawings

Preferred embodiments of the present invention are described in detail below with reference to the accompanying drawings, to give those skilled in the art a clearer understanding of the abovementioned and other features and advantages of the present invention. In the drawings:

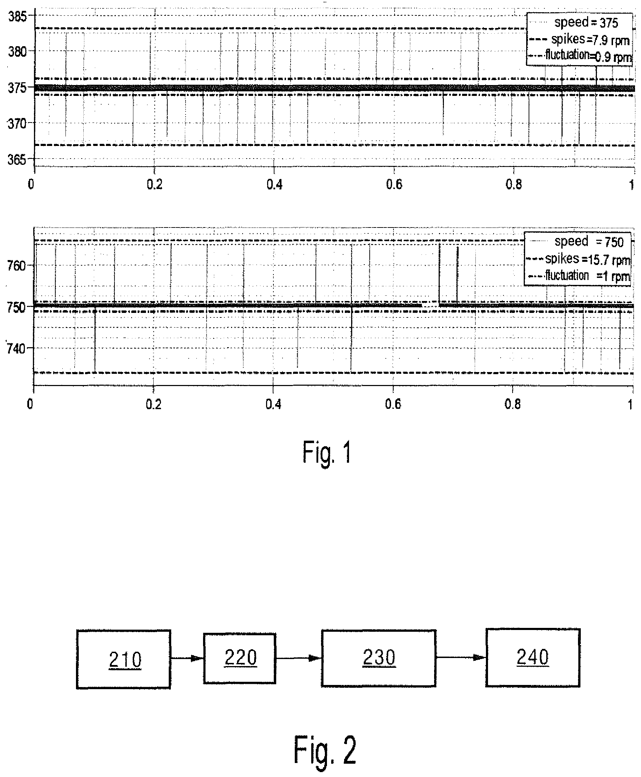

Fig. 1 is a schematic performance diagram of different electric machine rotation speed signals calculated at an electric machine driver side in one example. The electric machine rotation speed shown in the upper figure is 375 rpm (revolutions per minute) ; the electric machine rotation speed shown in the lower figure is 750 rpm.
Fig. 2 is a schematic structural diagram of an existing capacitive encoder.

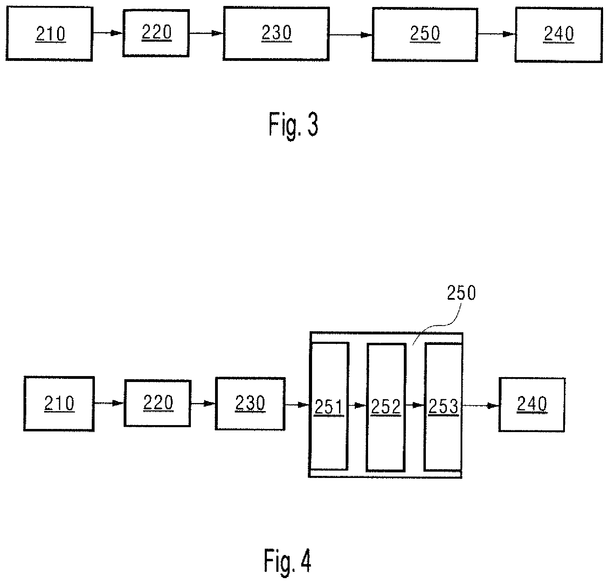

Fig. 3 is a demonstrative structural diagram of a capacitive encoder in an embodiment of the present invention.
Fig. 4 is a schematic structural diagram of a capacitive encoder in an example of the present invention.

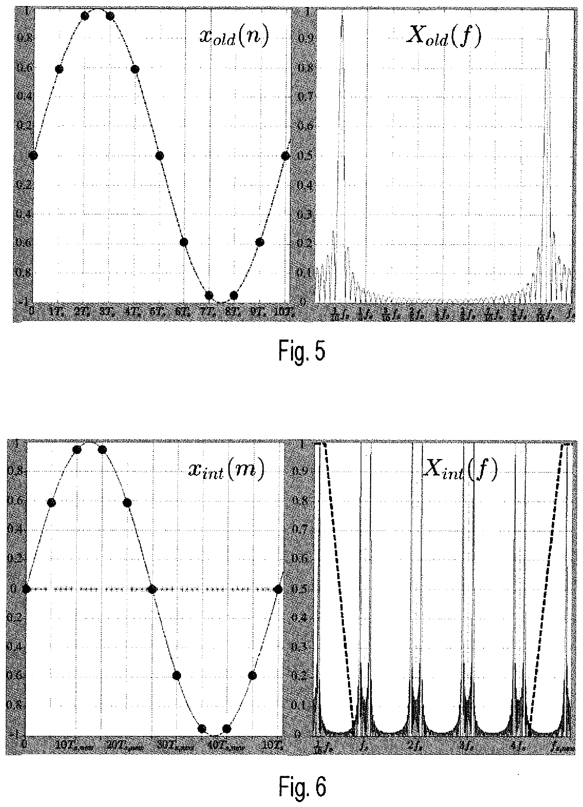

Fig. 5 is schematic diagrams of a first processing signal x_{old}(n) and a frequency spectrum X_{old}(f) thereof in said example. On the left is a schematic diagram of the first processing signal x_{old}(n); on the right is a schematic diagram of the frequency spectrum X_{old}(f) of the first processing signal x_{old}(n).
Fig. 6 is schematic diagrams of an intermediate signal xᵢₙₜ(m) obtained in the case where N = 5 in said example, and a frequency spectrum Xᵢₙₜ(f) thereof. On the left is a schematic diagram of the intermediate signal xᵢₙₜ(m); on the right is a schematic diagram of the frequency spectrum Xᵢₙₜ(f) of the intermediate signal xᵢₙₜ(m).

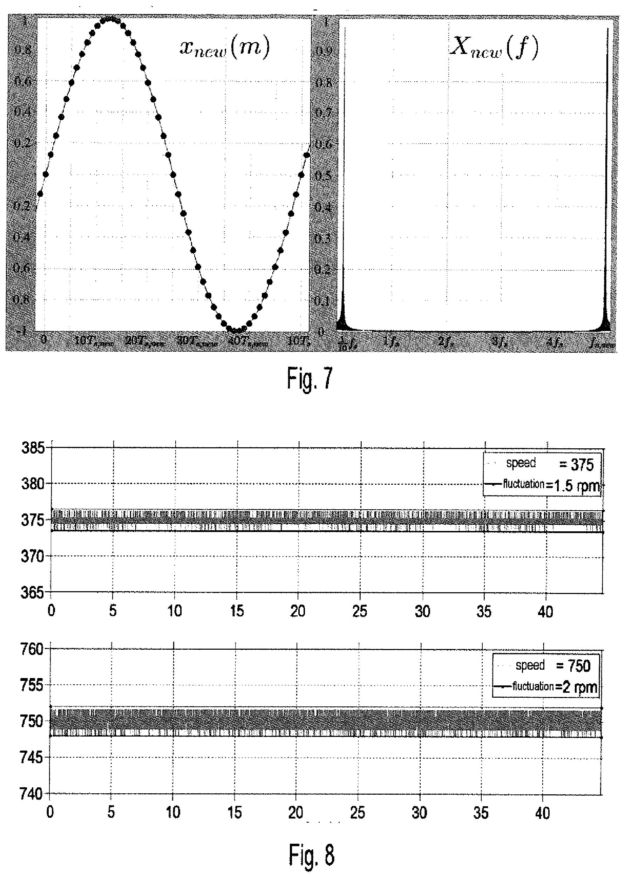

Fig. 7 is schematic diagrams of a second processing signal x_{new}(m) obtained by interpolation filtering in said example, and a frequency spectrum X_{new}(f) thereof. On the left is a schematic diagram of the second processing signal x_{new}(m); on the right is a schematic diagram of the frequency spectrum X_{new}(f) of the second processing signal x_{new}(m).
Fig. 8 is a schematic performance diagram of electric machine rotation speed signals obtained through calculation at the electric machine driver side after receiving the second processing signal in said example. The electric machine rotation speed shown in the upper figure is 375 rpm (revolutions per minute); the electric machine rotation speed shown in the lower figure is 750 rpm.

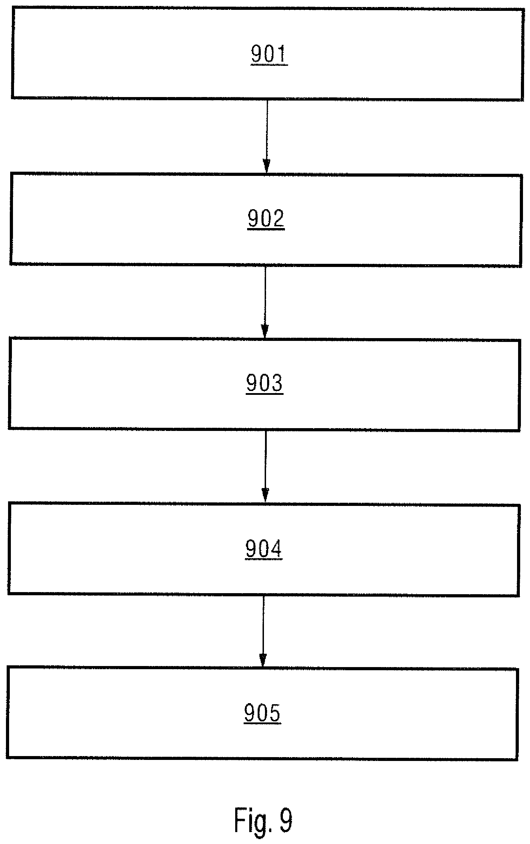

Fig. 9 is a demonstrative flow chart of a signal processing method of a capacitive encoder in an embodiment of the present invention.

**Key to the drawings:**

| Label | Meaning |
|---|---|
| 210 | analog sampling circuit |
| 220 | analog-to-digital conversion module |
| 230 | digital signal processing module |
| 240 | communication module |
| 250 | upsampling processing module |
| 251 | data cache sub-module |
| 252 | zero interpolation sub-module |
| 253 | interpolation filtering sub-module |
| 901 - 905 | steps |

### Particular embodiments

In this embodiment, the inventors discovered that although crystal oscillators are a very good clock source for the average electronic device, they are limited by manufacturing precision, and the frequencies of different crystal oscillators might not be exactly the same; in addition, the frequency of a crystal oscillator might also drift with environmental changes such as temperature and time. Even a small deviation between two clock sources might cause a large phase difference, and in turn affect product performance. In the case of a capacitive encoder, possible asynchrony between the clock source thereof and the clock source of the electric machine driver will cause forward/rearward misplacement in electric machine rotor position information provided to the electric machine driver by the capacitive encoder; for example, the electric machine driver might request the encoder to provide electric machine rotor position data for the 50th sampling point thereof, but due to asynchrony between the clock sources of the two, the capacitive encoder might provide electric machine rotor position data for the 49th sampling point or 51st sampling point to the electric machine driver, and this would then lead to errors in information such as electric machine rotation speed determined by the electric machine driver according to the electric machine rotor position data provided by the capacitive encoder, so that problems such as abnormal spikes occur. For instance, fig. 1 is a schematic performance diagram of different electric machine rotation speed signals calculated at an electric machine driver side in one example. In fig. 1, the x-axis is minutes and the y-axis is rpm (revolutions per minute) . The electric machine rotation speed shown in the upper figure is 375 rpm; the electric machine rotation speed shown in the lower figure is 750 rpm. Clearly, the electric machine rotation speed signal determined by the electric machine driver according to the electric machine rotor position information provided by the capacitive encoder contains not only unavoidable fluctuations, but also abnormal spikes, and these abnormal spikes vary with electric machine rotation speed.

Fig. 2 is a schematic structural diagram of an existing capacitive encoder. As fig. 2 shows, the encoder comprises: an analog sampling circuit 210, an analog-to-digital conversion module 220, a digital signal processing module 230 and a communication module 240. The analog sampling circuit 210 is configured to acquire an analog sampling signal carrying electric machine rotor position information. The analog-to-digital conversion module 220 is configured to convert the analog sampling signal acquired by the analog sampling circuit 210 to a digital sampling signal comprising multiple digital sampling points. The digital signal processing module 230 is configured to subject the digital sampling signal to filtering and other processing, to obtain a first processing signal. A sampling rate of the first processing signal is a first sampling rate. The communication module 240 is configured to send the first processing signal to the electric machine driver.

In an embodiment of the present invention, to eliminate problems such as abnormal spikes in signals at the electric machine driver side caused by clock source asynchrony, it is possible to add an upsampling processing module 250 in the encoder, as shown in fig. 3, wherein the upsampling processing module is configured to subject the first processing signal to upsampling processing, such that the first processing signal (the sampling frequency of which is the first sampling rate) is converted to a second processing signal (the sampling frequency of which is a second sampling rate), wherein the second sampling rate is higher than the first sampling rate. The second processing signal is then sent to the electric machine driver by the communication module 230. The second processing signal at this time, after the first processing signal has been processed to increase the sampling rate, has reduced the angular difference between two sampling points, and thereby greatly increased the accuracy of the sampling points, and in turn ameliorated problems such as abnormal spikes in the electric machine rotation speed signal calculated at the driver side, caused by the problem of clock asynchrony. Taking an example for illustration, suppose the first processing signal is a 10 kHz (Hertz) sine wave input signal, and the first sampling rate is 400 kHz; this then corresponds to 40 sampling points in one period; in this case, if forward/rearward misplacement of sampling points occurs in a position information signal (i.e. the first processing signal) provided to the electric machine driver, then the angular difference between two sampling points is a first angular difference, i.e. 360°/40 = 9°. Correspondingly, if the sampling rate is increased to 2000 kHz, this then corresponds to 200 sampling points in one period; in this case, if forward/rearward misplacement of sampling points occurs in a position information signal (i.e. the second processing signal) provided to the electric machine driver, then the angular difference between two sampling points is a second angular difference, i.e. 360°/200 = 1.8°. Clearly, the second angular difference is far smaller than the first angular difference, therefore the accuracy of the sampling points can be greatly increased, so as to ameliorate problems such as abnormal spikes in electric machine rotation speed signals calculated at the driver side, caused by the problem of clock asynchrony.

Upsampling processing may be specifically implemented in different ways; for example, it may be subjecting the first processing signal to zero interpolation and interpolation filtering, to obtain the second processing signal. Alternatively, it could also be using a digital sampling module with a high sampling rate to perform digital sampling, to obtain the second processing signal.

In order to clarify the object, technical solution and advantages of the present invention, the present invention is explained in further detail below by way of embodiments.

Fig. 4 is a schematic structural diagram of a capacitive encoder in an example of the present invention. As fig. 4 shows, an upsampling processing module 250 in the capacitive encoder may specifically comprise: a data cache sub-module 251, a zero interpolation sub-module 252 and an interpolation filtering sub-module 253.

The data cache sub-module 251 is configured to receive and cache a first processing signal with a first sampling rate from the digital signal processing module 230. Fig. 5 shows schematic diagrams of a first processing signal x_{old}(n) received by the data cache sub-module 251 in this example and a frequency spectrum X_{old}(f) thereof. On the left is a schematic diagram of the first processing signal x_{old}(n); on the right is a schematic diagram of the frequency spectrum X_{old}(f) of the first processing signal x_{old}(n). Clearly, in fig. 5 the sampling period is Tₛ and the sampling frequency is fₛ.

The zero interpolation sub-module 252 is configured to insert N-1 zeros uniformly between each pair of adjacent digital sampling points in the first processing signal, on the basis of a set interpolation factor N, to obtain an intermediate signal, the sampling frequency of which is a second sampling rate; the second sampling rate is N times the first sampling rate. N is a positive integer, and the maximum value of N is the ratio of the maximum value of a data frequency which can be outputted by the upsampling processing module 250, to the first sampling rate. Fig. 6 shows schematic diagrams of an intermediate signal xᵢₙₜ(m) obtained in the case where N = 5 in this example, and a frequency spectrum Xᵢₙₜ(f) thereof. On the left is a schematic diagram of the intermediate signal xᵢₙₜ(m); on the right is a schematic diagram of the frequency spectrum Xᵢₙₜ(f) of the intermediate signal xᵢₙₜ(m). Clearly, in fig. 6, sampling period T_{s,new}=Tₛ/5, and sampling frequency f_{s,new}=5fₛ, i.e. the sampling rate has been increased by a factor of 5.

The interpolation filtering sub-module 253 is configured to subject the intermediate signal with the second sampling rate to interpolation filtering (e.g. processing which includes low-pass filtering), to filter out a high-frequency mirror image frequency spectrum, obtain a second processing signal (the sampling frequency of which is the second sampling rate), and provide the second processing signal to the communication module 240 as a signal to be sent. Fig. 7 shows schematic diagrams of a second processing signal x_{new}(m) obtained by interpolation filtering in this example, and a frequency spectrum X_{new}(f) thereof. On the left is a schematic diagram of the second processing signal x_{new}(m); on the right is a schematic diagram of the frequency spectrum X_{new}(f) of the second processing signal x_{new}(m). Clearly, in fig. 7, after performing zero sampling value filling and interpolation filtering using the interpolation factor 5, the sampling rate has increased by a factor of 5. Of course, in actual applications, depending on the requirements of a processing flow after the upsampling processing module 250 with regard to data frequency, corresponding adjustments may be made to the interpolation factor. The lower-limit value of the interpolation factor is 1, and the upper-limit value is the ratio of the maximum value of a data frequency which can be outputted by the upsampling processing module 250, to the first sampling rate; for example, it could be another value, such as 10, 15, 20, 25, 30, etc.

Fig. 8 is a schematic performance diagram of electric machine rotation speed signals obtained through calculation at the electric machine driver side after receiving the second processing signal in said example. In fig. 8, the x-axis is minutes and the y-axis is rpm (revolutions per minute). The electric machine rotation speed shown in the upper figure is 375 rpm; the electric machine rotation speed shown in the lower figure is 750 rpm. Clearly, problems such as abnormal spikes caused by clock source asynchrony have been eliminated in both of the different electric machine rotation speed signals calculated.

In this embodiment, the analog-to-digital conversion module 220, digital signal processing module 230, upsampling processing module 250 and communication module 240 may be implemented by means of software, or by means of hardware, or by means of a combination of software and hardware. Likewise, the sub-modules in the upsampling processing module 250 may also be implemented by means of software, or by means of hardware, or by means of a combination of software and hardware.

Fig. 9 is a demonstrative flow chart of a signal processing method of a capacitive encoder in an embodiment of the present invention. As Fig. 9 shows, the method may comprise the following steps:
Step 901, acquiring an analog sampling signal carrying electric machine rotor position information.
Step 902, converting the analog sampling signal to a digital sampling signal.
Step 903, subjecting the digital sampling signal to processing which includes filtering, to obtain a first processing signal with a first sampling rate.
Step 904, subjecting the first processing signal with the first sampling rate to upsampling processing, such that the first processing signal with the first sampling rate is converted to a second processing signal with a second sampling rate, wherein the second sampling rate is higher than the first sampling rate.

Upsampling processing may be zero interpolation and interpolation filtering, or using a digital sampling module with a high sampling rate to obtain the second processing signal.

Taking as an example the case where zero interpolation and interpolation filtering are performed, this step 904 may comprise inserting N-1 zeros uniformly between each pair of adjacent digital sampling points in the first processing signal with the first sampling rate, on the basis of a set interpolation factor N, to obtain an intermediate signal with a second sampling rate; the second sampling rate is N times the first sampling rate. N is a positive integer, and N is less than the ratio of an operating frequency of the upsampling processing module 250, to a data frequency of the first processing signal. Next, the intermediate signal with the second sampling rate is subjected to interpolation filtering, to filter out a high-frequency mirror image frequency spectrum, and obtain a second processing signal with the second sampling rate. The interpolation factor may be 1, 5, 6, 7, 8, 9, 10,..., 15,..., 20,..., 25,..., 30,... Specifically, the lower-limit value of the interpolation factor is 1, and the upper-limit value is the ratio of the maximum value of a data frequency which can be outputted by the upsampling processing module performing this step 904, to the first sampling rate.

Step 905, sending the second processing signal with the second sampling rate to the electric machine driver.

The present invention also provides a machine-readable storage medium, which stores instructions configured to cause a computer to perform all or a part of the signal processing method of a capacitive encoder as described herein. Specifically, a system or apparatus equipped with a storage medium may be provided; software program code realizing functions of any one of the embodiments above is stored on the storage medium, and a computer (or CPU or MPU) of the system or apparatus is caused to read and execute program code stored in the storage medium.

In such a situation, program code read from a storage medium can itself realize functions of any one of the embodiments above, hence the program code and the storage medium storing the program code form part of the present invention.

Examples of storage media configured to provide program code include the cloud, floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards, ROM, PC machines, mobile phones and various intelligent devices, etc. Optionally, program code may be downloaded from a server computer via a communication network.

Furthermore, it should be clear that an operating system operating on a computer can be made to complete a portion of or all actual operations, not only through execution of program code read by a computer, but also by means of instructions based on program code, so as to realize functions of any one of the embodiments above.

In addition, it can be appreciated that program code read out from the storage medium is written into a memory installed in an expansion board inserted in the computer, or written into a memory installed in an expansion unit connected to the computer, and thereafter instructions based on the program code make a CPU etc. installed on the expansion board or expansion unit execute part or all of an actual operation, so as to realize the function of any one of the embodiments above.

## Claims

1. An encoder, comprising: an analog sampling circuit (210), an analog-to-digital conversion module (220), a digital signal processing module (230) and a communication module (240), wherein
the analog sampling circuit (210) is configured to acquire an analog sampling signal carrying electric machine rotor position information;
the analog-to-digital conversion module (220) is configured to convert the analog sampling signal to a digital sampling signal comprising multiple digital sampling points;
the digital signal processing module (230) is configured to process the digital sampling signal, to obtain a first processing signal, wherein a sampling rate of the first processing signal is a first sampling rate;
the communication module (240) is configured to communicate with an electric machine driver, wherein the encoder further comprises:
an upsampling processing module (250), configured to
subject the first processing signal to upsampling processing, such that the first processing signal is converted to a second processing signal, wherein a sampling rate of the second processing signal is a second sampling rate which is higher than the first sampling rate; and
provide the second processing signal to the communication module (240); wherein
the upsampling processing module (250) comprises:
a data cache sub-module (251), configured to receive and cache a first processing signal from the digital signal processing module (230) ;
a zero interpolation sub-module (252), configured to insert N-1 zeros uniformly between each pair of adjacent digital sampling points in the first processing signal, on the basis of a set interpolation factor N, to obtain an intermediate signal, a sampling frequency of which is a second sampling rate, wherein the second sampling rate is N times the first sampling rate, and wherein N is a positive integer; and
an interpolation filtering sub-module (253), configured to
subject the intermediate signal to interpolation filtering, to obtain a second processing signal, and
provide the second processing signal to the communication module (240).

2. The encoder as claimed in claim 1, **characterized in that** the lower limit of the value of said N is 1, and the upper limit of the value is the ratio of the maximum value of a data frequency which can be outputted by the upsampling processing module (250), to the first sampling rate.

3. An electric machine, **characterized by** comprising the encoder as claimed in claim 1 or claim 2.

4. A signal processing method of an encoder, comprising:
acquiring an analog sampling signal carrying electric machine rotor position information (901);
converting the analog sampling signal to a digital sampling signal comprising multiple digital sampling points (902); processing the digital sampling signal, to obtain a first processing signal (903); a sampling rate of the first processing signal being a first sampling rate;
**characterized in that** the method further comprises:
subjecting the first processing signal to upsampling processing, such that the first processing signal is converted to a second processing signal (903), wherein a sampling rate of the second processing signal is a second sampling rate which is higher than the first sampling rate;
sending the second processing signal to an electric machine driver (904), wherein
the step of subjecting the first processing signal to upsampling processing, such that the first processing signal is converted to a second processing signal, comprises:
inserting N-1 zeros uniformly between each pair of adjacent digital sampling points in the first processing signal, on the basis of a set interpolation factor N, to obtain an intermediate signal, a sampling frequency of which is a second sampling rate, wherein the second sampling rate is N times the first sampling rate, and wherein N is a positive integer; and
subjecting the intermediate signal to interpolation filtering, to obtain a second processing signal.

5. A computer program product, which encodes the steps of the method as claimed in claim 4.

6. A computer-readable storage medium, on which is stored the computer program product according to claim 5.

## Patentansprüche

1. Codierer, der Folgendes umfasst: eine analoge Abtastschaltung (210), ein Analog/Digital-Umsetzmodul (220), ein Digitalsignalverarbeitungsmodul (230) und ein Kommunikationsmodul (240), wobei
die analoge Abtastschaltung (210) konfiguriert ist, ein analoges Abtastsignal, das Elektromaschinenrotorpositionsinformationen führt, zu erfassen;
das Analog/Digital-Umsetzmodul (220) konfiguriert ist, das analoge Abtastsignal zu einem digitalen Abtastsignal, das mehrere digitale Abtastpunkte umfasst, umzusetzen;
das Digitalsignalverarbeitungsmodul (230) konfiguriert ist, das digitale Abtastsignal zu verarbeiten, um ein erstes Verarbeitungssignal zu erhalten, wobei eine Abtastrate des ersten Verarbeitungssignals eine erste Abtastrate ist; und
das Kommunikationsmodul (240) konfiguriert ist, mit einem Elektromaschinentreiber zu kommunizieren, wobei der Codierer ferner Folgendes umfasst:
ein Abtastratenerhöhungsmodul (250), das konfiguriert ist zum
Beaufschlagen des ersten Verarbeitungssignals mit einer Abtastratenerhöhungsverarbeitung, derart, dass das erste Verarbeitungssignal in ein zweites Verarbeitungssignal umgewandelt wird, wobei eine Abtastrate des zweiten Verarbeitungssignals eine zweite Abtastrate ist, die höher als die erste Abtastrate ist; und
Liefern des zweiten Verarbeitungssignals zum Kommunikationsmodul (240); wobei
das Abtastratenerhöhungsmodul (250) Folgendes umfasst:
ein Datenzwischenspeicheruntermodul (251), das konfiguriert ist, ein erstes Verarbeitungssignal vom Digitalsignalverarbeitungsmodul (230) zu empfangen und zwischenzuspeichern;
ein Nullinterpolationsuntermodul (252), das konfiguriert ist, N - 1 Nullen gleichmäßig zwischen jedem Paar benachbarter digitaler Abtastpunkte im ersten Verarbeitungssignal auf der Grundlage eines eingestellten Interpolationsfaktors N einzusetzen, um ein Zwischensignal zu erhalten, dessen Abtastfrequenz eine zweite Abtastrate ist, wobei die zweite Abtastrate gleich der N-fachen ersten Abtastrate ist und wobei N eine positive ganze Zahl ist; und
ein Interpolationsfilterungsuntermodul (253), das konfiguriert ist zum
Beaufschlagen des Zwischensignals mit einer Interpolationsfilterung, um ein zweites Verarbeitungssignal zu erhalten, und
Liefern des zweiten Verarbeitungssignals zum Kommunikationsmodul (240).

2. Codierer nach Anspruch 1, **dadurch gekennzeichnet, dass** die Untergrenze des Werts von N gleich 1 ist und die Obergrenze des Werts das Verhältnis des Maximalwerts einer Datenfrequenz, die durch das Abtastratenerhöhungsmodul (250) ausgegeben werden kann, zur ersten Abtastrate ist.

3. Elektromaschine, **dadurch gekennzeichnet, dass** sie den Codierer nach Anspruch 1 oder Anspruch 2 umfasst.

4. Signalverarbeitungsverfahren eines Codierers, das Folgendes umfasst:
Erfassen eines analogen Abtastsignals, das Elektromaschinenrotorpositionsinformationen (901) führt;
Umsetzen des analogen Abtastsignals zu einem digitalen Abtastsignal, das mehrere digitale Abtastpunkte (902) umfasst; und
Verarbeiten des digitalen Abtastsignals, um ein erstes Verarbeitungssignal (903) zu erhalten; wobei eine Abtastrate des ersten Verarbeitungssignals eine erste Abtastrate ist; wobei
das Verfahren ferner **gekennzeichnet ist durch**
Beaufschlagen des ersten Verarbeitungssignals mit einer Abtastratenerhöhungsverarbeitung derart, dass das erste Verarbeitungssignal in ein zweites Verarbeitungssignal (903) umgewandelt wird, wobei eine Abtastrate des zweiten Verarbeitungssignals eine zweite Abtastrate ist, die höher als die erste Abtastrate ist; und
Senden des zweiten Verarbeitungssignals zu einem Elektromaschinentreiber (904); wobei
der Schritt des Unterwerfens des ersten Verarbeitungssignals einer Abtastratenerhöhungsverarbeitung derart, dass das erste Verarbeitungssignal zu einem zweiten Verarbeitungssignal umgewandelt wird, Folgendes umfasst:
Einsetzen von N - 1 Nullen gleichmäßig zwischen jedem Paar benachbarter digitaler Abtastpunkte im ersten Verarbeitungssignal auf der Grundlage eines eingestellten Interpolationsfaktors N, um ein Zwischensignal zu erhalten, dessen Abtastfrequenz eine zweite Abtastrate ist, wobei die zweite Abtastrate das N-fache der ersten Abtastrate ist und wobei N eine positive ganze Zahl ist; und
Unterwerfen des Zwischensignals einer Interpolationsfilterung, um ein zweites Verarbeitungssignal zu erhalten.

5. Computerprogrammprodukt, das die Schritte des Verfahrens nach Anspruch 4 codiert.

6. Computerlesbares Speichermedium, in dem das Computerprogrammprodukt nach Anspruch 5 gespeichert ist.

## Revendications

1. Codeur comprenant : un circuit d'échantillonnage analogique (210), un module de conversion analogique-numérique (220), un module de traitement de signal numérique (230) et un module de communication (240), dans lequel
le circuit d'échantillonnage analogique (210) est configuré pour acquérir un signal d'échantillonnage analogique transportant des informations de position de rotor d'une machine électrique ;
le module de conversion analogique-numérique (220) est configuré pour convertir le signal d'échantillonnage analogique en un signal d'échantillonnage numérique comprenant plusieurs points d'échantillonnage numérique ;
le module de traitement de signal numérique (230) est configuré pour traiter le signal d'échantillonnage numérique, pour obtenir un premier signal de traitement, un taux d'échantillonnage du premier signal de traitement étant un premier taux d'échantillonnage ;
le module de communication (240) est configuré pour communiquer avec un conducteur d'une machine électrique, le codeur comprenant en outre :
un module de traitement de suréchantillonnage (250), configuré pour :
soumettre le premier signal de traitement à un traitement de suréchantillonnage, de telle sorte que le premier signal de traitement soit converti en un deuxième signal de traitement, un taux d'échantillonnage du deuxième signal d'échantillonnage étant un deuxième taux d'échantillonnage qui est supérieur au premier taux d'échantillonnage ; et
fournir le deuxième signal de traitement au module de communication (240);
le module de traitement de suréchantillonnage (250) comprenant :
un sous-module de mise en cache de données (251), configuré pour recevoir et mettre en cache un premier signal de traitement provenant du module de traitement de signal numérique (230) ;
un sous-module d'interpolation par insertion de zéros (252), configuré pour insérer N-1 zéros de façon uniforme entre chaque paire de points d'échantillonnage numérique adjacents dans le premier signal de traitement, en fonction d'un facteur d'interpolation défini N, pour obtenir un signal intermédiaire, dont une fréquence d'échantillonnage est un deuxième taux d'échantillonnage, le deuxième taux d'échantillonnage étant égal à N fois le premier taux d'échantillonnage, et N étant un entier positif ; et
un sous-module de filtrage d'interpolation (253), configuré pour
soumettre le signal intermédiaire à un filtrage d'interpolation, pour obtenir un deuxième signal de traitement, et
fournir le deuxième signal de traitement au module de communication (240).

2. Codeur selon la revendication 1, **caractérisé en ce que** la limite inférieure de la valeur dudit N est de 1, et la limite supérieure de la valeur est égale au rapport entre la valeur maximale d'une fréquence de données qui peut être émise par le module de traitement de suréchantillonnage (250) et le premier taux d'échantillonnage.

3. Machine électrique, **caractérisée en ce qu'**elle comprend le codeur selon la revendication 1 ou la revendication 2.

4. Procédé de traitement de signal d'un codeur, comprenant :
l'acquisition d'un signal d'échantillonnage analogique transportant des informations de position de rotor d'une machine électrique (901) ;
la conversion du signal d'échantillonnage analogique en un signal d'échantillonnage numérique comprenant plusieurs points d'échantillonnage numérique (902) ;
le traitement du signal d'échantillonnage numérique, pour obtenir un premier signal de traitement (903) ; un taux d'échantillonnage du premier signal de traitement étant un premier taux d'échantillonnage ;
**caractérisé en ce que** le procédé comprend en outre :
la soumission du premier signal de traitement à un traitement de suréchantillonnage, de telle sorte que le premier signal de traitement soit converti en un deuxième signal de traitement (903), un taux d'échantillonnage du deuxième signal d'échantillonnage étant un deuxième taux d'échantillonnage qui est supérieur au premier taux d'échantillonnage ;
envoi du deuxième signal de traitement à un conducteur de la machine électrique (904),
l'étape de soumission du premier signal de traitement à un traitement de suréchantillonnage, de telle sorte que le premier signal de traitement soit converti en un deuxième signal de traitement, comprenant :
l'insertion de N-1 zéros de façon uniforme entre chaque paire de points d'échantillonnage numérique adjacents dans le premier signal de traitement, en fonction d'un facteur d'interpolation défini N, pour obtenir un signal intermédiaire, dont une fréquence d'échantillonnage est un deuxième taux d'échantillonnage, le deuxième taux d'échantillonnage étant égal à N fois le premier taux d'échantillonnage, et N étant un entier positif ; et
la soumission du signal intermédiaire à un filtrage d'interpolation, pour obtenir un deuxième signal de traitement.

5. Produit de programme informatique, qui code les étapes du procédé selon la revendication 4.

6. Support de stockage lisible par ordinateur, sur lequel est stocké le produit de programme informatique selon la revendication 5.
